(19) Europäisches Patentamt
European Patent Office
Office européen des brevets

(11) EP 0 582 703 B1

(12) **FASCICULE DE BREVET EUROPEEN**

(45) Date de publication et mention de la délivrance du brevet:
**31.07.1996 Bulletin 1996/31**

(21) Numéro de dépôt: **93905439.1**

(22) Date de dépôt: **01.03.1993**

(51) Int Cl.6: **C08L 95/00**, C10C 3/02

(86) Numéro de dépôt international:
**PCT/FR93/00203**

(87) Numéro de publication internationale:
**WO 93/18092 (16.09.1993 Gazette 1993/22)**

(54) **PROCEDE DE PREPARATION DE COMPOSITIONS BITUME-POLYMERE, APPLICATION DES COMPOSITIONS OBTENUES A LA REALISATION DE REVETEMENTS ET SOLUTION MERE DE POLYMERE POUR L'OBTENTION DESDITES COMPOSITIONS**

Verfahren zur Herstellung von Bitumen-Polymer-Zusammensetzungen, Verwendung derselben zur Herstellung von Beschichtungen und Polymerstammlösung für die Herstellung dieser Zusammensetzungen

METHOD FOR PREPARING BITUMEN-POLYMER COMPOSITIONS, APPLICATION OF SAID COMPOSITIONS TO THE PRODUCTION OF COATINGS, AND MOTHER POLYMER SOLUTION FOR OBTAINING SAID COMPOSITIONS

(84) Etats contractants désignés:
**AT BE CH DE DK GB IT LI NL SE**

(30) Priorité: **03.03.1992 FR 9202506**

(43) Date de publication de la demande:
**16.02.1994 Bulletin 1994/07**

(73) Titulaire: **ELF ANTAR FRANCE**
**F-92400 Courbevoie (FR)**

(72) Inventeurs:
- **PLANCHE, Jean-Pascal**
  **F-69360 SEREZIN DU RHONE (FR)**
- **GERMANAUD, Laurent**
  **F-38540 Heyrieux (FR)**
- **NICOL, Pascal**
  **F-64000 Pau (FR)**
- **TRAVERS, François**
  **F-42350 La Talaudière (FR)**

(74) Mandataire: **Boillot, Marc**
**Elf Aquitaine Production,**
**Département Propriété Industrielle,**
**Tour Elf,**
**Cédex 45**
**92078 Paris La Défense (FR)**

(56) Documents cités:
**EP-A- 0 096 638**
**EP-A- 0 360 656**
**EP-A- 0 446 391**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 582 703 B1

Printed by Jouve, 75001 PARIS (FR)

## Description

L'invention concerne un procédé de préparation de compositions bitume-polymère. Elle se rapporte encore à l'application des compositions obtenues à la réalisation de revêtements et en particulier de revêtements superficiels routiers, d'enrobés ou encore de revêtements d'étanchéité, et a trait également à une solution mère de polymère utilisable pour l'obtention desdites compositions.

Il est connu d'utiliser des compositions bitumineuses comme revêtements de surfaces diverses et en particulier comme enduits superficiels routiers à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :

. point de ramollissement, exprimé en °C et déterminé par l'essai Bille et Anneau défini par la norme NF T 66 008,
. point de fragilité ou point de Fraass, exprimé en °C et déterminé selon la norme IP 80/53,
. pénétration, exprimée en 1/10 de mm et déterminée selon la norme NF T 66 004,
. caractéristiques rhéologiques en traction déterminées selon la norme NF T 46 002 et comportant les grandeurs :

  contrainte au seuil $\sigma s$ en bars
  allongement au seuil $\varepsilon s$ en %
  contrainte à la rupture $\sigma r$ en bars
  allongement à la rupture $\varepsilon r$ en %

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume-polymère ayant des qualités mécaniques améliorées par rapport à celles des bitumes seuls.

Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylate, polychloroprène, terpolymère éthylène/propylène/diène (EPDM), polynorbornène, ou encore copolymères statistiques ou séquencés de styrène et d'un diène conjugué.

Parmi les polymères ajoutés aux bitumes, les copolymères statistiques ou séquences de styrène et d'un diène conjugué et notamment de styrène et de butadiène ou de styrène et d'isoprène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume-polymère peut être améliorée par couplage chimique du polymère au bitume, cette amélioration permettant en outre d'élargir le domaine d'utilisation des compositions bitume-polymère.

Des compositions bitume-polymère pour lesquelles un copolymère statistique ou séquencé de styrène et d'un diène conjugué tel que butadiène ou isoprène est couplé au bitume peuvent être préparées en faisant appel aux procédés décrits dans les citations FR-A-2376188, FR-A-2429241, FR-A-2528439 et EP-A-0360656. Dans ces procédés, on incorpore ledit copolymère et une source de soufre au bitume, en opérant entre 130°C et 230°C et sous agitation, puis l'on maintient le mélange ainsi formé sous agitation et à une température entre 130°C et 230°C pendant au moins quinze minutes. La source de soufre consiste en soufre chimiquement non lié (FR-A-2376188 et FR-A-2429241), en un polysulfure (FR-A-2528439) ou en un accélérateur de vulcanisation donneur de soufre utilisé seul ou en association avec du soufre chimiquement non lié et/ou un polysulfure ou un accélérateur de vulcanisation non donneur de soufre (EP-A-0360656) et l'incorporation du copolymère et de la source de soufre au bitume est réalisée soit par addition directe desdits ingrédients au bitume (FR-A-2376188, FR-A-2528439 et EP-A-0360656) ou bien en préparant tout d'abord une solution mère du copolymère et de la source de soufre dans une huile hydrocarbonée, puis en ajoutant ladite solution mère au bitume (FR-A-2429241, FR-A-2528439 et EP-A-0360656).

On a maintenant trouvé que l'on pouvait encore améliorer substantiellement, entre autres, la consistance (augmentation du point de ramollissement Bille et Anneau) et l'élasticité, notamment élasticité à basse température, des compositions bitume-polymère pour lesquelles un copolymère séquencé de styrène et de diène conjugué, notamment butadiène et isoprène, est couplé au bitume sous l'action d'un agent de couplage donneur de soufre, si l'on choisissait ledit copolymère séquencé parmi certains copolymères linéaires diséquencés A-B ou triséquencés A-B-A, A désignant une séquence polymérique consistant en un bloc polystyrène seul ou prolongé du côté de B par un copolymère statistique de styrène et du diène conjugué et B représentant une séquence polymérique formée de motifs du diène conjugué, qui possèdent des caractéristiques particulières, comme défini ci-après, de masse moléculaire et de composition.

L'invention a donc pour objet un procédé de préparation de compositions bitume-polymère, dans lequel on réalise, à température comprise entre 100°C et 230°C, un mélange de bitume avec un copolymère séquencé linéaire de styrène et de diène conjugué ayant une masse moléculaire moyenne en poids comprise entre 120000 et 400000 et présentant une structure de type A-B ou A-B-A, A désignant une séquence polymérique consistant en un bloc polystyrène seul ou prolongé du côté de B par un copolymère statistique de styrène et du diène conjugué et B représentant une séquence polymérique formée de motifs du diène conjugué, ledit copolymère séquence étant utilisé en quantité allant de 0,5 à 25% en poids du bitume, et avec un agent de couplage renfermant au moins un composé donneur de soufre et l'on maintient le mélange obtenu, à une température comprise entre 100°C et 230°C et sous agitation, pendant une durée d'au moins dix minutes, ledit procédé se caractérisant en ce que le copolymère séquencé de styrène et de diène conjugué possède une teneur en styrène sous forme de bloc polystyrène dans la ou les séquences polymériques A comprise entre 5,2% et 14,7% en poids du copolymère et en ce que, lorsque la ou les séquences A du copolymère séquence A-B ou A-B-A consistent en un bloc polystyrène prolongé du côté de B par un copolymère statistique de styrène et du diène conjugué, la teneur pondérale totale du copolymère séquence en styrène est au plus égale à 20%.

Le bitume, qui constitue la partie majoritaire des compositions bitume-polymère suivant l'invention, peut être choisi parmi les bitumes et mélanges de bitumes ayant une viscosité cinématique à 100°C avantageusement comprise entre $0,5x10^{-4}m^2/s$ et $3x10^{-2}m^2/s$ et de préférence entre $1x10^{-4}m^2/s$ et $2x10^{-2}m^2/s$. De tels bitumes peuvent être des bitumes de distillation directe ou de distillation sous pression réduite, des bitumes soufflés ou semi-soufflés, voire même des coupes pétrolières ou des mélanges de bitumes et de distillats sous vide.

Les bitumes et mélanges de bitumes ayant les caractéristiques précitées de viscosité cinématique ont une pénétration, définie suivant la norme NF T 66004, généralement supérieure à 5 et, pour de nombreux bitumes, comprise entre 5 et 500 et plus spécialement entre 20 et 400.

Le copolymère séquencé linéaire de styrène et de diène conjugué utilisé dans la préparation de la composition bitume-polymère selon l'invention est plus spécialement tel que le diène conjugué entrant dans sa composition avec le styrène est choisi parmi butadiène, isoprène, chloroprène, butadiène carboxylé et isoprène carboxylé et tout particulièrement parmi butadiène et isoprène. Avantageusement, le copolymère séquence linéaire de styrène et de diène conjugué et en particulier chacun des copolymères particuliers pour lesquels le diène conjugué est choisi comme indiqué ci-dessus, possède une masse moléculaire moyenne en poids ($\overline{M}w$) allant de 150000 à 350000 et plus spécialement de 170000 à 250000.

De préférence, le copolymère séquencé A-B ou A-B-A possède une teneur pondérale en diène conjugué au plus égale à 90%.

Le copolymère séquence linéaire de styrène et de diène conjugué ayant la structure A-B (diséquencé) ou A-B-A (triséquencé) et les caractéristiques de masse moléculaire moyenne en poids et de composition définies plus haut peut être soit un copolymère bloc vrai, c'est-à-dire pour lequel la séquence polymérique A du copolymère diséquencé A-B ou chacune des séquences polymériques A du copolymère triséquencé A-B-A consiste uniquement en un bloc polystyrénique, soit un copolymère bloc à charnière statistique (en anglais "tapered copolymer" ou "graded copolymer"), c'est-à-dire pour lequel la séquence A du copolymère diséquencé A-B ou au moins l'une des séquences A du copolymère triséquencé A-B-A consiste en un bloc polystyrénique prolongé du côté de B par un copolymère statistique de styrène et du diène conjugué, lequel copolymère statistique est désigné par l'expression "charnière statistique".

Le copolymère séquencé linéaire de styrène et de diène conjugué utilisable pour la préparation des compositions bitume-polymère selon l'invention, peut être obtenu par polymérisation anionique en solution des monomères styrène et diène conjugué comme il est bien connu dans l'art relatif à la production de copolymères linéaires A-B (diséquencé) et A-B-A (triséquencé) de styrène et de diène conjugué. Avantageusement, on peut produire les copolymères séquences linéaires de styrène et de diène conjugué de structure A-B ou A-B-A et de type copolymère bloc vrai en faisant appel à un procédé comparable à celui qui est décrit, par exemple, dans l'une ou l'autre des citations FR-A-1230077 et EP-A-0457647. Pour produire les copolymères séquencés linéaires de styrène et de diène conjugué de structure A-B ou A-B-A et de type copolymère bloc à charnière statistique on peut faire appel à un procédé comparable à celui qui est décrit, par exemple, dans l'une ou l'autre des citations FR-A-1230077, US-A-3287333, US-A-3906058, US-A-4172190 et EP-A-0457647.

Avantageusement, la quantité de copolymère séquence linéaire de styrène et de diène conjugué associée au bitume pour former, en présence de l'agent de couplage donneur de soufre, la composition bitume-polymère représente 0,5% à 15% et plus spécialement 0,7% à 10% du poids du bitume.

L'agent de couplage renfermant au moins un composé donneur de soufre est utilisé en proportion propre à fournir une quantité de soufre représentant, en poids, 0,1 à 10% et de préférence 0,4 à 8% du poids du copolymère séquence linéaire de styrène et de diène conjugué.

L'agent de couplage renfermant au moins un composé donneur de soufre peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi (i) les produits M, qui renferment, en

poids, de 0% à 100% d'une composante D consistant en un ou plusieurs accélérateurs de vulcanisation donneurs de soufre et de 100% à 0% d'une composante E consistant en un ou plusieurs agents de vulcanisation choisis parmi le soufre élémentaire et les polysulfures d'hydrocarbyle et (ii) les produits N qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale

$$R_1-(S)_m-\left(R-(S)_m\right)_x-R_2$$

dans laquelle $R_1$ et $R_2$ désignent chacun un radical hydrocarboné monovalent, saturé ou insaturé, en $C_1$ à $C_{20}$ ou sont reliés entre eux pour constituer un radical hydrocarboné divalent en $C_1$ à $C_{20}$, saturé ou insaturé, formant un cycle avec les autres groupements d'atomes associés dans la formule, R est un radical hydrocarboné divalent, saturé ou insaturé, en $C_1$ à $C_{20}$, les $-(S)_m$-représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et x représente un nombre entier prenant les valeurs de zéro à 10. Des polysulfures préférés répondent à la formule $R_3-(S)_p-R_3$, dans laquelle $R_3$ désigne un radical alcoyle en $C_6$ à $C_{16}$, par exemple hexyle, octyle, dodécyle, tertiododécyle, hexadécyle, nonyle, décyle, et $-(S)_p$-représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule

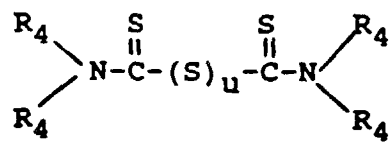

dans laquelle les $R_4$, identiques ou différents, représentent chacun un radical hydrocarboné en $C_1$ à $C_{12}$ et de préférence en $C_1$ à $C_8$, notamment radical alcoyle, cycloalcoyle ou aryle, ou bien deux radicaux $R_4$ fixés à un même atome d'azote sont reliés entre eux pour former un radical divalent hydrocarboné en $C_2$ à $C_8$ et u est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre on peut encore citer les disulfures d'alcoylphénols et les disulfures tels que disulfure de morpholine et N,N'-disulfure de caprolactame.

Les accélérateurs de vulcanisation non donneurs de soufre utilisables pour former la composante C des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule

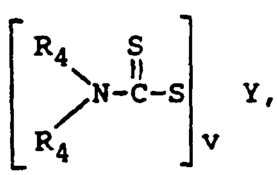

dans laquelle les $R_4$, identiques ou différents, ont la signification donnée plus haut, Y représente un métal et v désigne la valence de Y, et les monosulfures de thiurame de formule

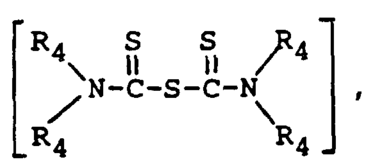

dans laquelle les $R_4$ ont la signification donnée plus haut.

Des exemples d'accélérateurs de vulcanisation du type des mercaptobenzothiazoles peuvent être tels que mercaptobenzothiazole, benzothiazole thiolate d'un métal tel que zinc, sodium, cuivre, disulfure de benzothiazyle,

2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, ce dernier composé pouvant être employé éventuellement en présence d'acides gras du type acide stéarique, acide laurique, acide éthylcaproique.

Pour plus de détails sur les accélérateurs de vulcanisation donneurs de soufre et non donneurs de soufre utilisables dans la constitution de l'agent de couplage, on peut se référer aux citations EP-A-0360656 et EP-A-0409683.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

Le mélange réactionnel formé du bitume, du copolymère séquencé linéaire et de l'agent de couplage, qui donne naissance à la composition bitume-polymère, peut être encore additionné de 1 à 40% et plus particulièrement de 2 à 30%, en poids du bitume, d'un agent fluxant, qui peut consister, notamment, en une huile hydrocarbonée présentant un intervalle de distillation à pression atmosphérique, déterminé selon la norme ASTM D 86-67, compris entre 100°C et 600°C et situé plus spécialement entre 150°C et 400°C. Cette huile hydrocarbonée, qui peut être notamment une coupe pétrolière de caractère aromatique, une coupe pétrolière de caractère napthéno-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume-polymère la contenant, de manière à retrouver les mêmes propriétés mécaniques qu'aurait présentées, après répandage à chaud, la composition bitume-polymère préparée sans utiliser d'agent fluxant. L'agent fluxant peut être ajouté au milieu réactionnel que l'on forme à partir du bitume, du copolymère séquencé linéaire et de l'agent de couplage, à un moment quelconque de la constitution dudit milieu, la quantité d'agent fluxant étant choisie, dans les intervalles définis plus haut, pour être compatible avec l'usage final désiré sur le chantier.

Au milieu réactionnel formé du bitume, du copolymère séquencé linéaire, de l'agent de couplage et éventuellement de l'agent fluxant, on peut encore ajouter, à un moment quelconque de la constitution dudit milieu, des additifs divers et notamment des composés azotés du type des amines ou amides tels que ceux définis dans la citation EP-A-0409683, à titre de promoteurs d'adhésion de la composition bitume-polymère finale aux surfaces minérales, lesdits composés azotés étant incorporés audit milieu réactionnel avant l'addition de l'agent de couplage à ce dernier de manière à ce que ces composés azotés soient greffés sur le copolymère linéaire séquencé dans la composition bitume-polymère résultante.

Dans une forme de mise en oeuvre du procédé selon l'invention utilisant une huile hydrocarbonée telle que définie plus haut, à titre d'agent fluxant, le copolymère et l'agent de couplage sont incorporés au bitume sous la forme d'une solution mère de ces produits dans l'huile hydrocarbonée constituant l'agent fluxant.

La solution mère est préparée par mise en contact des ingrédients la composant, à savoir huile hydrocarbonée servant de solvant, copolymère et agent de couplage, sous agitation, à des températures comprises entre 10 et 170°C et plus particulièrement entre 40 et 120°C, pendant un temps suffisant, par exemple d'environ 30 minutes à environ 90 minutes, pour obtenir une dissolution complète du copolymère et de l'agent de couplage dans l'huile hydrocarbonée.

Les concentrations respectives du copolymère et de l'agent de couplage dans la solution mère peuvent varier assez largement en fonction notamment de la nature de l'huile hydrocarbonée utilisée pour dissoudre le copolymère et l'agent de couplage. Ainsi les quantités respectives de copolymère et d'agent de couplage peuvent représenter avantageusement 5% à 40% et 0,02 à 15% du poids de l'huile hydrocarbonée. Une solution mère préférée renferme, comptés en poids de l'huile hydrocarbonée employée comme solvant, 10 à 35% de copolymère et 0,1 à 5% d'agent de couplage.

Lorsque les compositions suivant l'invention sont formées directement à partir des ingrédients bitume, copolymère et agent de couplage, on opère de préférence en mettant tout d'abord en contact le copolymère avec le bitume, dans

les proportions choisies, à une température comprise entre 100°C et 230°C et sous agitation, pendant une durée suffisante, généralement de l'ordre de quelques dizaines de minutes à quelques heures, pour former un mélange homogène, puis on ajoute l'agent de couplage au mélange obtenu et maintient le tout sous agitation à une 5 température comprise entre 100°C et 230°C, par exemple correspondant à la température de mise en contact du copolymère avec le bitume, pendant une durée au moins égale à 10 minutes, et généralement allant de 10 à 90 minutes, pour permettre à l'agent de couplage de libérer du soufre radicalaire et au soufre radicalaire ainsi produit d'initier d'une part le greffage du copolymère au bitume et d'autre part le pontage des chaînes dudit copolymère entre elles.

Les quantités de copolymère mise en contact avec le bitume et d'agent de couplage ajoutée ensuite au mélange homogène de bitume et dudit copolymère sont choisies pour être comprises dans les intervalles définis précédemment pour ces quantités.

Lorsqu'un agent fluxant est utilisé, il peut être ajouté au milieu réactionnel formé du bitume, du copolymère séquencé linéaire et de l'agent de couplage à un moment quelconque de la constitution dudit milieu.

Pour préparer les compositions bitume-polymère suivant l'invention en faisant appel à la technique de la solution mère, on mélange la solution mère du copolymère et de l'agent de couplage avec le bitume, en opérant à une température comprise entre 100°C et 230°C et sous agitation, ceci étant effectué par exemple en ajoutant la solution mère au bitume maintenu sous agitation à la température entre 100°C et 230°C, puis on maintient le mélange résultant sous agitation à une température comprise entre 100°C et 230°C, par exemple à la température utilisée pour le mélange de la solution mère au bitume, pendant une durée au moins égale à 10 minutes, et généralement allant de 10 à 90 minutes, pour permettre, par le biais de l'agent de couplage, le greffage du copolymère aux asphaltènes du bitume et le pontage des chaînes dudit copolymère entre elles.

La quantité de solution mère mélangée au bitume est choisie pour fournir les quantités désirées, par rapport au bitume, de copolymère et d'agent de couplage, lesdites quantités étant dans les fourchettes définies précédemment.

Une forme de mise en oeuvre particulièrement préférée pour la préparation de compositions bitume-polymère suivant l'invention par la technique de la solution mère consiste à mettre en contact, à une température comprise entre 100°C et 230°C et sous agitation, de 80 à 95% en poids du bitume avec 20 à 5% en poids de la solution mère, cette dernière renfermant, en poids de l'huile hydrocarbonée servant de solvant, 10 à 35% de copolymère de styrène et de diène conjugué et 0,1 à 5% d'agent de couplage, puis à maintenir le mélange ainsi obtenu sous agitation à une température comprise entre 100°C et 230°C, et de préférence à la température utilisée pour la mise en contact du bitume avec la solution mère, pendant une durée au moins égale à 10 minutes, et de préférence comprise entre 10 et 60 minutes.

Les compositions bitume/polymère selon l'invention sont utilisables directement ou après mise en émulsion aqueuse, pour la réalisation de revêtements et notamment de revêtements routiers du type enduits superficiels, pour la production d'enrobés mis en place à chaud ou à froid, ou encore pour la réalisation de revêtements d'étanchéité.

L'invention est illustrée par les exemples suivants donnés à titre non limitatif.

Les caractéristiques rhéologiques et mécaniques des bitumes ou des compositions bitume-polymère auxquelles on fait référence dans ces exemples sont celles définies précédemment, à savoir, pénétration, point de ramollissement, point de Fraass et caractéristiques rhéologiques par traction.

EXAMPLE 1 :

Préparation d'une composition bitume-polymère témoin par incorporation directe d'un copolymère diséquencé styrène/butadiène et d'un agent de couplage au bitume

En opérant à 170°C sous agitation, on mélangeait 1 000 parties en poids d'un bitume de distillation directe ayant une pénétration de 82, un point de ramollissement Bille et Anneau de 48°C, un point de Fraass égal à - 18,5°C et une viscosité cinématique à 160°C de $1{,}7 \times 10^{-4} m^2/s$ avec 20 parties en poids d'un copolymère diséquencé commercial de styrène et de butadiène présentant une masse moléculaire moyenne en poids égale à environ 75 000 et renfermant 25% en poids de styrène.

Après 3 heures 10 minutes de mélange sous agitation, on obtenait une masse homogène.

A cette masse maintenue à 170°C, on ajoutait alors 1 partie en poids de soufre cristallisé et on agitait encore l'ensemble pendant 60 minutes pour former la composition bitume-polymère.

Dans le tableau I on donne les principales caractéristiques de la composition bitume-polymère ainsi obtenue avant et après l'avoir soumise à l'essai de vieillissement dit "Rolling Film Oven Test" défini dans la norme ASTM D 2872. Les compositions bitume-polymère avant et après essai de vieillissement sont désignées respectivement par "Produit Ia1" et "Produit Ia2".

Le tableau I donne également les caractéristiques correspondantes du bitume de départ avant et après l'essai de vieillissement (respectivement "Produit Ib1" et "Produit Ib2").

En se reportant aux valeurs inscrites au tableau I, on peut voir que l'utilisation d'un agent de couplage constitué

de soufre cristallisé conduit à une composition bitume-polymère, dont les caractéristiques élastomériques la différencient nettement du bitume (comparer les résultats de l'essai de traction). Par ailleurs, la stabilité au vieillissement de la composition bitume-polymère est améliorée par rapport à celle observée pour le bitume pur.

TABLEAU I

| Caractéristiques / Produit | Pénétrabilité à 25 °C (1/10 mm) | Point de ramollissement TBA (°C) | Point de Fraass (°C) | ESSAI DE TRACTION | | | | | |
|---|---|---|---|---|---|---|---|---|---|
| | | | | Tempé-rature (°C) | Vitesse mm/mn | $\sigma s$ (bars) | $\sigma r$ (bars) | $\epsilon s$ (%) | $\epsilon r$ (%) |
| Ia1 | 71 | 51 | - 19,5 | 20 | 500 | 1,65 | 0,50 | 22,2 | > 900 |
| | | | | 5 | 500 | 16,60 | 4,90 | 15,50 | 820 |
| Ia2 | 56 | 57 | - 17 | 20 | 500 | 3,30 | 0,75 | 24,30 | > 900 |
| | | | | 5 | 500 | 17,55 | 6,10 | 16,95 | 444 |
| Ib1 | 82 | 48 | - 18,5 | 20 | 500 | 1,2 | 0 | 15 | > 900 |
| | | | | 5 | 500 | FRAGILE | | | |
| Ib2 | 51 | 50 | - 15 | 20 | 500 | 1,8 | 0 | 15 | > 900 |
| | | | | 5 | 500 | FRAGILE | | | |

EXEMPLE2 :

Préparation d'une composition bitume-polymère selon l'invention par incorporation directe d'un copolymère diséquencé styrène/butadiène et d'un agent de coulage au bitume

On opérait comme décrit dans l'exemple 1 en utilisant toutefois comme copolymère, un copolymère diséquencé styrène/butadiène selon l'invention ayant la structure A-B et les caractéristiques données ci-après:

. $\overline{M}w$ : 181 000
. Teneur pondérale en butadiène : 86 %
. Teneur pondérale en styrène sous forme de bloc polystyrène : 14 %

Ce copolymère diséquencé était obtenu en faisant appel à une technique de polymérisation anionique comparable à celle enseignée par la citation EP-A-0457647.

Préparation du copolymère diséquencé :

Dans un réacteur de 20 litres en acier inoxydable équipé d'une régulation de température et d'un agitateur du type double ruban couplé à un moteur de 0,55 kW, on introduisait, après une purge à l'azote et plusieurs lavages avec une solution de n-BuLi (n-butyl lithium) dans l'éthylbenzène, 2000g d'éthylbenzène sec et 0,96g de n-BuLi.

On chargeait alors dans le réacteur 400g de styrène, en moins de 10 minutes, ce qui entraînait, du fait de la réaction, une élévation de la température à une valeur d'environ 45°C que l'on maintenait pendant 1 heure pour s'assurer d'une consommation totale du styrène. Au contenu du réacteur, on ajoutait alors 2460g de butadiène liquide, en réalisant cette addition en continu dans un temps inférieur à 3 heures et de telle sorte qu'au bout de 30 minutes le milieu réactionnel était à une température de 70°C, ladite température étant ensuite maintenue jusqu'à la fin de la polymérisation. La pression dans le réacteur était égale à 4 bars.

Lorsque la viscosité du milieu, mesurée à 70°C, atteignait sensiblement 580 Pa.s, le réacteur était placé pendant 30 minutes sous une pression de 4 bars de $CO_2$, après quoi on y introduisait 1,5g d'eau et maintenait son contenu pendant 30 minutes à 90°C.

Au contenu du réacteur on ajoutait alors, à la température de 90°C, 0,3% en poids d'antioxydant IRGANOX 1520® et 0,6% en poids de trinonylphénylphosphite, après quoi le copolymère était dégazé en une seule étape flash dans un dispositif conventionnel constitué d'une chambre de dévolatilisation malaxée. Cette opération était réalisée à 150°C sous une pression de 2000 Pa. et permettait de récupérer, par l'intermédiaire d'une vis d'extraction et d'un équipement de granulation, des granulés du copolymère ayant une teneur résiduelle finale en solvant inférieure à 1000 ppm.

Le copolymère obtenu avait les caractéristiques définies plus haut. La masse moléculaire en poids était déterminée à partir de courbes GPC (chromatographie par perméation de gel ou gel perméation chromatography) tandis que le rapport styrène bloc:styrène total et les teneurs pondérales en styrène et en butadiène étaient obtenues par spectroscopie infrarouge.

Dans le tableau II on donne, pour les compositions bitume-polymère obtenues dans les exemples 1 et 2, des caractéristiques analogues à celles figurant dans le tableau I. Les mêmes notations symbolisent les caractéristiques correspondant aux compositions bitume-polymère avant et après l'essai de vieillissement.

Comme il ressort des résultats présentés au tableau II, l'utilisation du copolymère diséquencé linéaire styrène/butadiène selon l'invention conduit à l'obtention d'une composition bitume-polymère présentant des caractéristiques élastomériques substantiellement améliorées, notamment à basse température, après vieillissement par rapport à celles observées pour la 5 composition bitume-polymère témoin.

TABLEAU II

| Caractéristiques / Produit | Pénétrabilité à 25 °C (1/10 mm) | Point de ramollissement TBA (°C) | Point de Fraass (°C) | ESSAI DE TRACTION | | | | | |
|---|---|---|---|---|---|---|---|---|---|
| | | | | Tempé-rature (°C) | Vitesse mm/mn | $\sigma s$ (bars) | $\sigma r$ (bars) | $\epsilon s$ (%) | $\epsilon r$ (%) |
| Ia1 | 71 | 51 | - 19,5 | 20 | 500 | 1,65 | 0,50 | 22,2 | > 900 |
| | | | | 5 | 500 | 16,60 | 4,90 | 15,50 | 820 |
| Ia2 | 50 | 57 | - 17 | 20 | 500 | 3,30 | 0,75 | 24,30 | > 900 |
| | | | | 5 | 500 | 17,55 | 6,10 | 16,95 | 444 |
| IIa1 | 73 | 53 | - 20 | 20 | 500 | 1,70 | 0,60 | 21,62 | > 900 |
| | | | | 5 | 500 | 14,42 | 5,11 | 24,1 | > 900 |
| IIa2 | 52 | 57 | - 18 | 20 | 500 | 2,73 | 1 | 23,40 | > 900 |
| | | | | 5 | 500 | 18,90 | 6,05 | 23,40 | 700 |

EXEMPLES 3 A 5 :

Préparation de compositions bitume-polymère selon l'invention par incorporation directe du copolymère et de l'agent de couplage au bitume

On opérait comme décrit dans l'exemple 2 avec toutefois certaines variations qui sont définies ci-après, les autres conditions générales étant celles de l'exemple 2.

Dans l'exemple 3, le copolymère était un copolymère triséquencé linéaire styrène/butadiène selon l'invention ayant la structure A-B-A et les caractéristiques suivantes :

. $\overline{M}w$ : 192 000
. Teneur pondérale en styrène sous forme de bloc polystyrène : 14,2 %
. Teneur pondérale en butadiène : 85,8 %

Ce copolymère triséquencé linéaire était obtenu en faisant appel à une technique de polymérisation anionique comparable à celle enseignée par la citation EP-A-0457647.

Dans l'exemple 4, le copolymère était un copolymère diséquencé linéaire styrène/butadiène à charnière statistique (tapered copolymer) selon l'invention ayant la structure A-B et les caractéristiques suivantes :

. $\overline{M}w$ : 191000
. $\overline{M}n$ : 172000
. Indice de polydispersité ($\overline{M}w$ : $\overline{M}n$) : 1,11
. Teneur pondérale en styrène total : 12 %
. Teneur pondérale en butadiène : 88 %
. Teneur pondérale en styrène sous forme de bloc polystyrène : 5,5 %

Ce copolymère diséquencé linéaire à charnière statistique était préparé en faisant appel à une technique de polymérisation anionique comparable à celle enseignée par la citation FR-A-1230077.

Dans l'exemple 5, le copolymère était un copolymère diséquencé linéaire styrène/butadiène à charnière statistique (tapered copolymer) selon l'invention ayant la structure A-B et les caractéristiques suivantes :

. $\overline{M}w$ 200000
. Teneur pondérale en styrène total : 17 %
. Teneur pondérale en butadiène : 83 %
. Teneur pondérale en styrène sous forme de bloc polystyrène : 10,7 %

Ce copolymère diséquencé linéaire à charnière statistique était préparé en faisant appel à une technique de polymérisation anionique comparable à celle enseignée par la citation FR-A-1230077.

Préparation du copolymère triséquencé de l'exemple 3

On opérait comme décrit dans l'exemple 2 jusqu'à la fin de l'introduction du butadiène dans le réacteur. La pression dans le réacteur était égale à 4 bars. On utilisait 2,80g de n-BuLi.

Lorsque la viscosité du milieu, mesurée à 70°C, atteignait sensiblement 580 Pa.s, on ajoutait au contenu du réacteur, maintenu à 70°C, une quantité d'acétate d'éthyle égale à 2,6g, puis on maintenait le tout à ladite température pendant 30 minutes de manière à ce que l'acétate d'éthyle puisse agir comme agent de couplage de chaînes copolymériques diséquencées en chaînes copolymériques triséquencées, la viscosité du produit couplé atteignant sensiblement 600 Pa.s à la température de 70°C au bout de ladite durée. Le réacteur était alors placé pendant 30 minutes sous une pression de 4 bars de $CO_2$, après quoi on y introduisait 3g d'eau et maintenait son contenu pendant 30 minutes à 90°C.

Le contenu du réacteur était ensuite traité comme indiqué dans l'exemple 2, avec en finale obtention d'un copolymère triséquencé ayant les caractéristiques définies plus haut et une teneur résiduelle finale en solvant inférieure à 1000 ppm, lesdites caractéristiques étant déterminées comme indiqué dans l'exemple 2.

Préparation du copolymère diséquencé à charnière statistique de l'exemple 4 :

Dans un réacteur vertical agité en acier inoxydable, préalablement soumis à une purge à l'azote et à plusieurs lavages avec une solution de n-BuLi (n-butyl lithium) dans le cyclohexane, on introduisait 7000g de cyclohexane sec

et 0,90g de n-BuLi.

On chargeait alors dans le réacteur 162g de styrène en moins de 10 minutes et polymérisait cette charge de styrène à une température inférieure à 60°C. Après polymérisation du styrène, on introduisait conjointement dans le réacteur 198g de styrène et 200g de butadiène, en réalisant cette introduction conjointe des monomères styrène et butadiène en continu avec maintien du milieu de polymérisation à une température de 70°C. Après consommation totale des monomères, 2440g de butadiène étaient introduits dans le réacteur et polymérisés à 70°C en moins de 3 heures.

A l'issue de la polymérisation du butadiène, on terminait la polymérisation en ajoutant au contenu du réacteur une solution à 5% d'isopropanol dans le toluène renfermant également 0,3% en poids d'antioxydant IRGANOX 1520® et 0,6% en poids de trinonylphosphite, après quoi le copolymère produit était séparé de sa solution dans le cyclohexane par précipitation à l'aide d'isopropanol.

Le copolymère diséquencé obtenu à charnière statistique avait les caractéristiques définies plus haut, lesdites caractéristiques étant déterminées comme indiqué dans l'exemple 2.

Préparation du copolymère diséquencé à charnière statistique de l'exemple 5 :

On opérait comme décrit pour la préparation du copolymère diséquencé à charnière statistique de l'exemple 4, avec toutefois polymérisation de 320g de styrène dans la première phase, copolymérisation de 190g de styrène et 200g de butadiène dans la deuxième phase et polymérisation de 2290g de butadiène dans la troisième phase.

Le copolymère diséquencé obtenu à charnière statistique avait les caractéristiques définies plus haut, lesdites caractéristiques étant déterminées comme indiqué dans l'exemple 2.

On donne dans le tableau III les caractéristiques des compositions bitume-polymère obtenues, avant et après l'essai de vieillissement, pour l'exemple 3 (produits IIIa1 et IIIa2), l'exemple 4 (produits IVa1) et l'exemple 5 (produits Va1 et Va2).

L'utilisation des copolymères selon l'invention conduit encore à des compositions bitume-polymère, dont le point de ramollissement Bille et Anneau est augmenté, ce qui permet l'utilisation de ces compositions dans une gamme plus large de température.

TABLEAU III

| Caractéristiques / Produit | Pénétrabilité à 25 °C (1/10 mm) | Point de ramollissement TBA (°C) | Point de Fraass (°C) | ESSAI DE TRACTION | | | | | |
|---|---|---|---|---|---|---|---|---|---|
| | | | | Température (°C) | Vitesse mm/mn | $\sigma s$ (bars) | $\sigma r$ (bars) | $\epsilon s$ (%) | $\epsilon r$ (%) |
| IIIa1 | 74 | 54 | - 23 | 20 | 500 | 1,8 | 0,71 | 24 | > 900 |
| | | | | 5 | 500 | 15,1 | 6,3 | 16,2 | > 900 |
| IIIa2 | 56 | 59 | - 21 | 20 | 500 | 2,8 | 1,3 | 27,2 | > 900 |
| | | | | 5 | 500 | 18 | 7,3 | 17,9 | > 900 |
| IVa1 | 79 | 58 | - 18 | 20 | 500 | 1,9 | 0,83 | 22,9 | > 900 |
| | | | | 5 | 500 | 14,5 | 6,7 | 17,6 | > 900 |
| Va1 | 71 | 55 | - 20 | 20 | 500 | 1,45 | 0,70 | 23,4 | > 900 |
| | | | | 5 | 500 | 14,1 | 6,2 | 18,6 | > 900 |
| Va2 | 51 | 58 | - 19 | 20 | 500 | 2,55 | 1,21 | 25,8 | > 900 |
| | | | | 5 | 500 | 19 | 7,0 | 15,7 | > 900 |

EXEMPLES 6-7 :

Préparation de compositions bitume-polymère selon l'invention par incorporation directe du copolymère et de l'agent de couplage au bitume

Dans l'exemple 6, on opérait comme décrit dans l'exemple 2, mais en utilisant 25 parties en poids du copolymère diséquencé styrène/butadiène au lieu de 20 parties en poids.

Dans l'exemple 7, on opérait comme décrit dans l'exemple 2, mais en utilisant 25 parties en poids du copolymère diséquencé styrène/butadiène au lieu de 20 parties en poids et en constituant l'agent de couplage d'un mélange de 0,1 partie en poids de soufre cristallisé et de 0,02 partie en poids d'un accélérateur de vulcanisation donneur de soufre consistant en disulfure de tétraméthylthiurame.

On donne dans le tableau IV les caractéristiques des compositions bitume-polymère ainsi obtenues, avant et après les avoir soumises à l'essai de vieillissement, pour l'exemple 6 (produits VIa1 et VIa2) et l'exemple 7 (produits VIIa1 et VIIa2).

TABLEAU IV

| Caractéristiques / Produit | Pénétrabilité à 25 °C (1/10 mm) | Point de ramollissement TBA (°C) | Point de Fraass (°C) | ESSAI DE TRACTION Tempé-rature (°C) | Vitesse mm/mn | $\sigma s$ (bars) | $\sigma r$ (bars) | $\epsilon s$ (%) | $\epsilon r$ (%) |
|---|---|---|---|---|---|---|---|---|---|
| VIa1 | 65 | 54 | - 19,5 | 20 | 500 | 1,8 | 0,6 | 24,6 | > 900 |
| | | | | 5 | 500 | 13,7 | 5,4 | 23,4 | > 900 |
| VIa2 | 46,8 | 58,2 | - 18 | 20 | 500 | 2,8 | 1,2 | 27,7 | > 900 |
| | | | | 5 | 500 | 18 | 7,1 | 23,4 | 730 |
| VIIa1 | 64 | 55 | - 20 | 20 | 500 | 1,6 | 0,7 | 24 | > 900 |
| | | | | 5 | 500 | 13,6 | 5,1 | 24 | > 900 |
| VIIa2 | 48,7 | 58,2 | - 19 | 20 | 500 | 2,7 | 1,2 | 26,5 | > 900 |
| | | | | 5 | 500 | 18,6 | 8 | 20,3 | > 900 |

EXEMPLE 8

Préparation d'une composition bitume-polymère témoin par la technique de la solution mère

a - Préparation de la solution mère :

On opérait dans un réacteur en acier inoxydable muni d'un agitateur et d'une double enveloppe susceptible d'être parcourue par un fluide caloporteur.

L'huile hydrocarbonée utilisée comme solvant pour former la solution mère était une coupe pétrolière de caractère naphténo/aromatique présentant les caractéristiques suivantes :

. point initial de distillation ASTM égal à 176°C
. point final de distillation ASTM égal à 352°C (mesurés suivant la norme ASTM D 86-67)
. point éclair (norme Luchaire NF T 60103) de 79°C
. masse volumique (norme ASTM D 1657-64) égale à 0,956.

On introduisait dans le réacteur 233 parties en poids de la coupe pétrolière et chauffait cette coupe pétrolière, tout en l'agitant, jusqu'à une température d'environ 100°C par circulation d'un fluide chaud dans la double enveloppe du réacteur.

En maintenant cette température et l'agitation, on introduisait alors dans le réacteur 2 parties en poids de soufre cristallisé et 54 parties en poids d'une poudre, antimottée par 2% en poids de silice, d'un copolymère diséquencé commercial de styrène et de butadiène renfermant en poids 25% de styrène et possédant une masse moléculaire moyenne viscosimétrique d'environ 75 000.

Après une heure d'agitation à la température d'environ 100°C, on obtenait une solution homogène et fluide à température ordinaire caractérisée par les valeurs suivantes de viscosité cinématique :

. viscosité cinématique mesurée à 50°C : 12,10 x $10^{-4}m^2/s$
. viscosité cinématique mesurée à 100°C : 2,92 x $10^{-4}m^2/s$

Cette solution constituait la solution mère utilisée pour la préparation de la composition bitume-polymère.

b - Préparation de la composition bitume-polymère

Dans une cuve équipée d'agitateurs et pourvue de réchauffeurs à vapeur, on pompait à 170°C, 1 700 parties d'un bitume de distillation directe présentant les propriétés physiques initiales suivantes :

. point de ramollissement (essai B & A) : 48°C
. point de Fraass : - 18,5°C
. pénétration : 82 1/10 mm
. viscosité cinématique à 160°C : 1,70 x $10^{-4}m^2/s$

Au contenu de la cuve, maintenu à 170°C sous agitation, on ajoutait ensuite 300 parties de la solution mère préparée comme décrit ci-dessus.

Après 30 minutes d'agitation à la température de 170°C, on obtenait une composition fluide bitume-polymère présentant une viscosité dynamique à 160°C égale à 0,098 Pa.s, c'est-à-dire une viscosité comparable à celle d'un bitume ayant une pénétration dans l'intervalle 180-220, et pouvant être chargée directement dans une répandeuse moyenne pression classique.

EXEMPLE 9 :

Préparation d'une composition bitume-polymère selon l'invention par la technique de la solution mère

On opérait comme dans l'exemple 8, mais en formant toutefois la solution mère avec 233 parties en poids de la coupe pétrolière, 42,7 parties en poids du copolymère diséquencé styrène/butadiène selon l'invention utilisé dans l'exemple 2 et 1,7 partie en poids de soufre cristallisé.

La composition bitume-polymère témoin de l'exemple 8 et la composition bitume-polymère selon l'invention de l'exemple 9 étaient soumises à un traitement thermique consistant à porter à 50°C, dans une étuve, un récipient métallique ouvert renfermant un échantillon de la composition bitume-polymère concernée et à maintenir ledit récipient

à cette température pendant 15 jours, cet essai permettant de simuler l'évaporation des produits légers de la coupe pétrolière et d'évaluer le produit après stabilisation.

On donne dans le tableau V les caractéristiques des compositions bitume-polymère obtenues, avant et après traitement thermique, pour l'exemple 8 témoin (produits VIIIa1 et VIIIa2) et pour l'exemple 9 selon l'invention (produits IXa1 et IXa2).

Comme il ressort des résultats présentés dans le tableau V, l'utilisation du copolymère selon l'invention conduit à l'obtention de compositions bitume-polymère présentant des caractéristiques élastomériques nettement améliorées en particulier à basse température.

TABLEAU V

| Caractéristiques / Produit | polymère (% poids) | Pseudo-viscosité*) à 50°C (s) | Pénétrabilité à 25°C (1/10 mm) | Point de ramollissement TBA (°C) | Ductilité à 5 °C (cm) | ESSAI DE TRACTION Température (°C) | Vitesse mm/mn | $\sigma_s$ (bars) | $\sigma_r$ (bars) | $\epsilon_s$ (%) | $\epsilon_r$ (%) |
|---|---|---|---|---|---|---|---|---|---|---|---|
| VIII a1 | 3 | 115 | - | - | - | 10 | 500 | 6,8 | 2,00 | - | > 900 |
| VIII a2 | 3 | - | 137 | 48 | 30 | 5 | 500 | 6,13 | 3,38 | - | > 900 |
| | | | | | | -10 | 100 | FRAGILE | | | |
| IX a 1 | 2,5 | 115 | - | - | - | 10 | 500 | 7,5 | 2,35 | - | > 900 |
| IX a2 | 2,5 | - | 146 | 49 | 65 | 5 | 500 | 6,2 | 4,30 | - | > 900 |
| | | | | | | -10 | 100 | 8,2 | 3,5 | - | 100 |

*) Déterminée selon la norme NF T 66 005

EXEMPLE 10 :

Préparation de compositions bitume-polymère témoins ou selon l'invention par incorporation directe du copolymère et de l'agent de couplage au bitume

A partir de quatre bitumes de distillation directe, référencés respectivement a, b, c et d et présentant les caractéristiques figurant au tableau VI, on préparait, d'une part, des compositions bitume-polymère témoins, respectivement X.1a, X.1b, X.1c et X.1d, et, d'autre part, des compositions selon l'invention, respectivement X.2a, X.2b, X.2c et X.2d.

TABLEAU VI

| Bitume | Pénétration à 25°C (1/10mm) | Point de ramollissement Bille & Anneau (°C) | Viscosité à 60°C *) (Pa.s) |
|---|---|---|---|
| a | 62 | 47,9 | 196 |
| b | 72 | 48 | 199,5 |
| c | 82 | 46,4 | 178,5 |
| d | 97 | 44,2 | 61,6 |

*) Déterminée selon la norme ASTM D 2171

Préparation des compositions bitume-polymère témoins ;

On opérait comme indiqué dans l'exemple 1, en mélangeant 938 parties en poids du bitume choisi avec 60 parties en poids du copolymère commercial diséquencé de styrène et de butadiène utilisé dans l'exemple 1.

Après 5 heures de mélange sous agitation, on obtenait une masse parfaitement homogène.

A cette masse maintenue à 170°C, on ajoutait alors 2 parties en poids de soufre cristallisé et on agitait encore l'ensemble pendant 90 minutes pour former une composition bitume-polymère.

Cette composition bitume-polymère était ensuite diluée à 170°C soit par 1000 parties en poids du bitume de départ pour obtenir une composition bitume-polymère renfermant 3% en poids de copolymère diséquencé, soit par 2000 parties en poids du bitume de départ pour obtenir une composition bitume-polymère à 2% en poids de copolymère diséquencé.

Préparation des compositions bitume-polymère selon l'invention

On opérait comme pour la préparation des compositions bitume-polymère témoins en utilisant toutefois un copolymère selon l'invention consistant en le copolymère diséquencé de styrène et de butadiène employé dans l'exemple 2.

A partir d'éprouvettes formées à l'aide de chacune des compositions bitume-polymère obtenues, à savoir compositions bitume-polymère témoins et compositions bitume-polymère selon l'invention, on a mesuré la ductilité de ces diverses compositions en réalisant cette mesure à 4°C selon la norme NF T 66-006.

La ductilité est mesurée par l'allongement, à l'instant précis de sa rupture, d'une éprouvette de forme déterminée que l'on étire à une vitesse et à une température normalisées.

Les valeurs de ductilité mesurées pour les compositions bitume-polymère et pour les bitumes de départ sont données dans le tableau VII.

TABLEAU VII

| Bitume | Teneur en polymère (% poids) | Ductilité à 4°C (mm) |
|---|---|---|
| a | 0 | < 15 |
| b | 0 | < 15 |
| c | 0 | < 10 |
| d | 0 | < 10 |
| Composition bitume-polymère | Teneur en polymère (% poids) | Ductilité (mm) |
| X.1a | 2<br>3 | 100<br>150 |
| X.1b | 2 | 170 |

TABLEAU VII (suite)

| Bitume | Teneur en polymère (% poids) | Ductilité à 4°C (mm) |
|---|---|---|
| Composition bitume-polymère | Teneur en polymère (% poids) | Ductilité (mm) |
| | 3 | 210 |
| X.1c | 2<br>3 | 250<br>310 |
| X.1d | 2<br>3 | 120<br>180 |
| X.2a | 2<br>3 | 240<br>240 |
| X.2b | 2<br>3 | 230<br>280 |
| X.2c | 2<br>3 | 470<br>510 |
| X.2d | 2<br>3 | 270<br>300 |

Comme il ressort des résultats figurant au tableau VII, l'utilisation du copolymère diséquencé linéaire de styrène et de butadiène selon l'invention conduit à l'obtention de compositions bitume-polymère présentant une homogénéité structurale et des caractéristiques élastomériques nettement améliorées par rapport aux compositions témoins, comme l'indiquent les valeurs mesurées de l'essai de ductilité à 4°C.

**Revendications**

1. Procédé de préparation de compositions bitume-polymère, dans lequel on réalise, à température comprise entre 100°C et 230°C, un mélange de bitume avec un copolymère séquencé linéaire de styrène et de diène conjugué ayant une masse moléculaire moyenne en poids comprise entre 120000 et 400000 et présentant une structure de type A-B ou A-B-A, A désignant une séquence polymérique consistant en un bloc polystyrène seul ou prolongé, du côté de B, par un copolymère statistique de styrène et du diène conjugué et B représentant une séquence polymérique formée de motifs du diène conjugué, ledit copolymère séquencé étant utilisé en quantité allant de 0,5% à 25% en poids du bitume, et avec un agent de couplage renfermant au moins un composé donneur de soufre et l'on maintient le mélange obtenu à une température comprise entre 100°C et 230°C et sous agitation, pendant une durée d'au moins dix minutes, caractérisé en ce que le copolymère séquencé de styrène et de diène conjugué possède une teneur en styrène sous forme de bloc polystyrène dans la ou les séquences polymériques A comprise entre 5,2% et 14,7% en poids du copolymère et en ce que, lorsque la ou les séquences A du copolymère séquencé A-B ou A-B-A consistent en un bloc polystyrène prolongé du côté de B par un copolymère statistique de styrène et du diène conjugué, la teneur pondérale totale du copolymère séquencé en styrène est au plus égale à 20%

2. Procédé selon la revendication 1, caractérisé en ce que la masse moléculaire moyenne en poids du copolymère séquencé de styrène et de diène conjugué va de 150000 à 350000 et plus spécialement de 170000 à 250000.

3. Procédé selon la revendication 1 ou 2, caractérisé en ce que le copolymère séquencé de styrène et de diène conjugué possède une teneur pondérale en diène conjugué au plus égale à 90%.

4. Procédé selon l'une des revendications 1 à 3, caractérisé en ce que la quantité de copolymère séquencé de styrène et de diène conjugué ajoutée au bitume représente 0,5% à 15% et plus spécialement 0,7% à 10% en poids dudit bitume.

5. Procédé selon l'une des revendications 1 à 4, caractérisé en ce que le copolymère séquence de styrène et de diène conjugué est tel que sa composante diène conjugué est choisie parmi butadiène, isoprène, chloroprène, butadiène carboxyle et isoprène carboxylé et tout spécialement parmi butadiène et isoprène.

6. Procédé selon l'une des revendications 1 à 5, caractérisé en ce que l'agent de couplage est un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

7. Procédé selon la revendication 6, caractérisé en ce que l'agent de couplage est choisi parmi (i) les produits M, qui renferment, en poids, de 0% à 100% d'une composante D consistant en un ou plusieurs accélérateurs de vulcanisation donneurs de soufre et de 100% à 0% d'une composante E consistant en un ou plusieurs agents de vulcanisation choisis parmi le soufre élémentaire et les polysulfures d'hydrocarbyle et (ii) les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

8. Procédé selon l'une des revendications 1 à 7, caractérisé en ce que l'agent de couplage est utilisé en proportion propre à fournir une quantité de soufre représentant, en poids, 0,1 à 10% et de préférence 0,4 à 8% du poids du copolymère séquencé linéaire de styrène et de diène conjugué.

9. Procédé selon l'une des revendications 1 à 8, caractérisé en ce que le bitume est choisi parmi les bitumes et mélanges de bitumes ayant une viscosité cinématique à 100°C comprise entre 0,5 x $10^{-4}m^2/s$ et 3 x $10^{-2}m^2/s$ et de préférence entre 1 x $10^{-4}m^2/s$ et 2 x $10^{-2}m^2/s$.

10. Procédé selon la revendication 9, caractérisé en ce que le bitume a une pénétration supérieure à 5 et plus particulièrement comprise entre 5 et 500 et plus spécialement entre 20 et 400.

11. Procédé selon l'une des revendications 1 à 10, caractérisé en ce que le mélange formé du bitume, du copolymère séquencé linéaire de styrène et de diène conjugué et de l'agent de couplage est additionné, à un moment quelconque de sa constitution, de 1 à 40% et plus particulièrement de 2 à 30%, en poids du bitume, d'un agent fluxant.

12. Procédé selon la revendication 11, caractérisé en ce que ledit agent fluxant consiste en une huile hydrocarbonée présentant un intervalle de distillation à pression atmosphérique, déterminé selon la norme ASTM D 86-67, compris entre 100°C et 600°C et situé plus spécialement entre 150°C et 400°C.

13. Procédé selon la revendication 12, caractérisé en ce que l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

14. Procédé selon la revendication 12 ou 13, caractérisé en ce que le copolymère séquence et l'agent de couplage sont incorporés au bitume sous la forme d'une solution mère de ces produits dans l'huile hydrocarbonée.

15. Procédé selon la revendication 14, caractérisé en ce que la solution mère est préparée par mise en contact des ingrédients la composant, sous agitation, à des températures comprises entre 10°C et 170°C et de préférence entre 40°C et 120°C.

16. Procédé selon la revendication 14 ou 15, caractérisé en ce que la solution mère renferme 5% à 40%, de préférence 10% à 35%, de copolymère et 0,02% à 15%, de préférence 0,1% à 5%, d'agent de couplage comptés en poids de l'huile hydrocarbonée.

17. Procédé selon l'une des revendications 14 à 16, caractérisé en ce que l'on met en contact, à une température comprise entre 100°C et 230°C et sous agitation, de 80 à 95% en poids de bitume avec 20 à 5% en poids de la solution mère, cette dernière renfermant, en poids de l'huile hydrocarbonée servant de solvant, 10 à 35% de copolymère séquencé et 0,1 à 5% d'agent de couplage, puis on maintient le mélange ainsi obtenu sous agitation à une température comprise entre 100°C et 230°C, et de préférence à la température utilisée pour la mise en contact du bitume avec la solution mère, pendant une durée au moins égale à 10 minutes, et de préférence comprise entre 10 et 60 minutes.

18. Application des compositions bitume-polymère obtenues par le procédé selon l'une des revendications 1 à 17, directement ou après mise en émulsion aqueuse, à la réalisation de revêtements et notamment de revêtements

routiers du type enduits superficiels, à la production d'enrobés mis en place à chaud ou à froid, ou encore à la réalisation de revêtements d'étanchéité.

**19.** Solution mère de polymère, utilisable notamment pour la préparation de compositions bitume-polymère, comprenant (i) une huile hydrocarbonée, qui présente un intervalle de distillation à pression atmosphérique, déterminé selon la norme ASTM D 86-67, compris entre 100°C et 600°C, et, en solution dans cette huile, (ii) un copolymère séquencé linéaire de styrène et de diène conjugué ayant une masse moléculaire moyenne en poids comprise entre 120000 et 400000 et présentant une structure de type A-B ou A-B-A, A désignant une séquence polymérique consistant en un bloc polystyrène seul ou prolongé du côté de B par un copolymère statistique de styrène et du diène conjugué et B représentant une séquence polymérique formée de motifs du diène conjugué, et (iii) un agent de couplage, caractérisé en ce que le copolymère séquencé de styrène et de diène conjugué possède une teneur en styrène sous forme de bloc polystyrène dans la ou les séquences polymériques A comprise entre 5,2% et 14,7% en poids du copolymère et en ce que, lorsque la ou les séquences A du copolymère séquencé A-B ou A-B-A consistent en un bloc polystyrène prolongé du côté de B par un copolymère statistique de styrène et du diène conjugué, la teneur pondérale totale du copolymère séquencé en styrène est au plus égale à 20%.

**20.** Solution mère selon la revendication 19, caractérisée en ce que la masse moléculaire moyenne en poids du copolymère séquence de styrène et de diène conjugué va de 150000 à 350000 et plus spécialement de 170000 à 250000.

**21.** Solution mère selon la revendication 19 ou 20, caractérisée en ce que le copolymère séquencé de styrène et de diène conjugué possède une teneur pondérale en diène conjugué au plus égale à 90%.

**22.** Solution mère selon l'une des revendications 19 à 21, caractérisée en ce que la composante diène conjugué du copolymère séquencé de styrène et de diène conjugué est choisie parmi butadiène, isoprène, chloroprène, butadiène carboxyle et isoprène carboxylé, et tout spécialement parmi butadiène et isoprène.

**23.** Solution mère selon l'une des revendications 19 à 22, caractérisée en ce qu'elle renferme 5% à 40%, de préférence 10% à 35%, de copolymère et 0,02% à 15%, de préférence 0,1% à 5%, d'agent de couplage comptés en poids de l'huile hydrocarbonée.

**24.** Solution mère selon l'une des revendications 19 à 23, caractérisée en ce que l'huile hydrocarbonée présente un intervalle de distillation à pression atmosphérique situé entre 150°C et 400°C.

**25.** Solution mère selon l'une des revendications 19 à 24, caractérisée en ce que l'huile hydrocarbonée est choisie parmi les coupes pétrolières de caractère aromatique, les coupes pétrolières de caractère naphténo-aromatique, les coupes pétrolières de caractère naphténoparaffinique, les coupes pétrolières de caractère paraffinique, les huiles de houille et les huiles d'origine végétale.

**26.** Solution mère selon l'une des revendications 19 à 25, caractérisée en ce que l'agent de couplage est un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

**27.** Solution mère selon la revendication 26, caractérisée en ce que l'agent de couplage est choisi parmi (i) les produits M, qui renferment, en poids, de 0% à 100% d'une composante D consistant en un ou plusieurs accélérateurs de vulcanisation donneurs de soufre et de 100% à 0% d'une composante E consistant en un ou plusieurs agents de vulcanisation choisis parmi le soufre élémentaire et les polysulfures d'hydrocarbyle et (ii) les produits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 5.

**28.** Solution mère selon l'une des revendications 19 à 27, caractérisée en ce qu'elle est préparée par mise en contact des ingrédients qui la composent, sous agitation, à des températures comprises entre 10°C et 170°C et de préférence entre 40°C et 120°C.

## Patentansprüche

1. Verfahren zur Herstellung von Bitumen-Polymer-Zusammensetzungen, in dem man bei einer Temperatur zwischen 100°C und 230°C ein Gemisch aus Bitumen mit einem linearen Blockcopolymer aus Styrol und konjugiertem Dien, das ein Gewichtsmittel des Molekulargewichts zwischen 120000 und 400000 hat und eine Struktur vom Typ A-B oder A-B-A aufweist, wobei A einen Polymerblock bezeichnet, der aus einem einzigen Polystyrolblock oder einem Polystyrolblock besteht, der, auf der Seite von B, durch ein statistisches Copolymer aus Styrol und dem konjugierten Dien verlängert ist, und B einen Polymerblock darstellt, der aus Grundbausteinen des konjugierten Diens gebildet ist, wobei dieses Blockcopolymer in einer Menge von 0,5% bis 25% bezogen auf das Gewicht des Bitumens verwendet wird, und mit einem Verknüpfungsmittel herstellt, das mindestens einen Schwefelspender enthält, und man das erhaltene Gemisch auf einer Temperatur zwischen 100°C und 230°C und unter Rühren während einer Dauer von mindestens 10 Minuten hält, dadurch gekennzeichnet, daß das Blockcopolymer aus Styrol und konjugiertem Dien einen Gehalt an Styrol in Form von Blockpolystyrol in dem oder den Polymerblöcken A zwischen 5,2% und 14,7% bezogen auf das Gewicht des Copolymers besitzt und dadurch, daß der Gesamtgewichtsgehalt des Blockcopolymers an Styrol höchstens 20% beträgt, wenn der oder die Blöcke A des Blockcopolymers A-B oder A-B-A aus einem Polystyrolblock bestehen, der auf der Seite von B durch ein statistisches Copolymer aus Styrol und dem konjugierten Dien verlängert ist.

2. Verfahren nach Anspruch 1, dadurch gekennzeichnet, daß das Gewichtsmittel des Molekulargewichts des Blockcopolymers aus Styrol und konjugiertem Dien zwischen 150000 und 350000 und insbesondere zwischen 170000 und 250000 liegt.

3. Verfahren nach einem der Ansprüche 1 oder 2, dadurch gekennzeichnet, daß das Blockcopolymer aus Styrol und konjugiertem Dien einen Gewichtsgehalt an konjugiertem Dien von höchstens 90% besitzt.

4. Verfahren nach einem der Ansprüche 1 bis 3, dadurch gekennzeichnet, daß die Menge des Blockcopolymers aus Styrol und konjugiertem Dien, die zu dem Bitumen gegeben wird, 0,5% bis 15% und insbesondere 0,7% bis 10% bezogen auf das Gewicht dieses Bitumens beträgt.

5. Verfahren nach einem der Ansprüche 1 bis 4, dadurch gekennzeichnet, daß das Blockcopolymer aus Styrol und konjugiertem Dien dergestalt ist, daß seine konjugierte Dien-Komponente ausgewählt wird unter Butadien, Isopren, Chloropren, carboxyliertem Butadien und carboxyliertem Isopren, insbesondere unter Butadien und Isopren.

6. Verfahren nach einem der Ansprüche 1 bis 5, dadurch gekennzeichnet, daß das Verknüpfungsmittel ein Produkt ist, das ausgewählt wird aus der Gruppe bestehend aus elementarem Schwefel, Kohlenwasserstoff-Polysulfiden, schwefelspendenden Vulkanisationsbeschleunigern, Gemischen dieser Produkte untereinander und/oder mit nicht-schwefelspendenen Vulkanisationsbeschleunigern.

7. Verfahren nach Anspruch 6, dadurch gekennzeichnet, daß das Verknüpfungsmittel ausgewählt wird unter (i) den Produkten M, die 0 bis 100 Gew.-% einer Komponente D, die aus einem oder mehreren schwefelspendenden Vulkanisationsbeschleunigern besteht, und 100 bis 0 Gew.-% einer Komponente E enthalten, die aus einem oder mehreren Vulkanisationsmitteln besteht, die ausgewählt werden unter elementarem Schwefel und Kohlenwasserstoff-Polysulfiden, und (ii) den Produkten N, die eine Komponente C, die aus einem oder mehreren nicht-schwefelspendenden Vulkanisationsbeschleunigern besteht, und ein Produkt M enthalten, wobei das Gewichtsverhältnis von Komponente C zu Produkt M von 0,01 bis 1 und bevorzugt von 0,05 bis 0,5 reicht.

8. Verfahren nach einem der Ansprüche 1 bis 7, dadurch gekennzeichnet, daß das Verknüpfungsmittel in einem Verhältnis verwendet wird, das geeignet ist, um eine Menge an Schwefel bereitzustellen, die 0,1 bis 10 Gew.-% und bevorzugt 0,4 bis 8 Gew.-% des Gewichts des linearen Blockcopolymers aus Styrol und konjugiertem Dien beträgt.

9. Verfahren nach einem der Ansprüche 1 bis 8, dadurch gekennzeichnet, daß das Bitumen ausgewählt wird unter den Bitumina und Bitumina-Gemischen, die eine kinematische Viskosität bei 100°C zwischen 0,5 x $10^{-4}$ $m^2/s$ und 3 x $10^{-2}$ $m^2/s$ und bevorzugt zwischen 1 x $10^{-4}$ $m^2/s$ und 2 x $10^{-2}$ $m^2/s$ haben.

10. Verfahren nach Anspruch 9, dadurch gekennzeichnet, daß das Bitumen eine Penetration besitzt, die höher ist als 5 und bevorzugt zwischen 5 und 500 und besonders bevorzugt zwischen 20 und 400 liegt.

**11.** Verfahren nach einem der Ansprüche 1 bis 10, dadurch gekennzeichnet, daß zu dem Gemisch, das aus dem Bitumen, dem linearen Blockcopolymer aus Styrol und konjugiertem Dien und dem Verknüpfungsmittel gebildet wird, in einem beliebigen Moment seiner Bildung ein Flußmittel gegeben wird, das 1 bis 40% und insbesondere 2 bis 30% bezogen auf das Gewicht des Bitumens ausmacht.

**12.** Verfahren nach Anspruch 11, dadurch gekennzeichnet, daß dieses Flußmittel aus einem Kohlenwasserstofföl besteht, das einen Destillationsbereich unter Atmosphärendruck, bestimmt gemäß der Norm ASTM D 86-67, zwischen 100°C und 600°C und insbesondere zwischen 150°C und 400°C aufweist.

**13.** Verfahren nach Anspruch 12, dadurch gekennzeichnet, daß das Kohlenwasserstofföl ausgewählt wird unter den Erdölfraktionen mit aromatischem Charakter, den Erdölfraktionen mit naphthen-aromatischem Charakter, den Erdölfraktionen mit naphthen-paraffinischem Charakter, den Erdölfraktionen mit paraffinischem Charakter, den Steinkohleölen und den Ölen pflanzlichen Ursprungs.

**14.** Verfahren nach Anspruch 12 oder 13, dadurch gekennzeichnet, daß das Blockcopolymer und das Verknüpfungsmittel im Bitumen in Form einer Mutterlauge dieser Produkte in dem Kohlenwasserstofföl eingemischt sind.

**15.** Verfahren nach Anspruch 14, dadurch gekennzeichnet, daß die Mutterlauge dadurch hergestellt wird, daß die Bestandteile, aus denen diese zusammengesetzt ist, unter Rühren bei Temperaturen zwischen 10°C und 170°C, bevorzugt zwischen 40°C und 120°C, in Kontakt gebracht werden.

**16.** Verfahren nach einem der Ansprüche 14 oder 15, dadurch gekennzeichnet, daß die Mutterlauge 5% bis 40%, bevorzugt 10% bis 35%, Copolymer und 0,02% bis 15%, bevorzugt 0,1% bis 5%, Verknüpfungsmittel bezogen auf das Gewicht des Kohlenwasserstofföls enthält.

**17.** Verfahren nach einem der Ansprüche 14 bis 16, dadurch gekennzeichnet, daß man bei einer Temperatur zwischen 100°C und 230°C und unter Rühren 80 bis 95 Gew.-% Bitumen mit 20 bis 5 Gew.-% der Mutterlauge in Kontakt bringt, wobei die Mutterlauge, bezogen auf das Gewicht des als Lösungsmittel dienenden Kohlenwasserstofföls, 10 bis 35% Blockcopolymer und 0,1 bis 5% Verknüpfungsmittel enthält, und man dann das so erhaltene Gemisch unter Rühren auf einer Temperatur zwischen 100°C und 230°C, und bevorzugt auf der Temperatur, bei der das Bitumen mit der Mutterlauge in Kontakt gebracht wurde, während einer Dauer von mindestens 10 Minuten und bevorzugt zwischen 10 und 60 Minuten hält.

**18.** Verwendung der Bitumen-Polymer-Zusammensetzungen, die nach dem Verfahren nach einem der Ansprüche 1 bis 17 erhalten werden, direkt oder nach dem Einbringen in eine wässerige Emulsion, zur Herstellung von Belägen und insbesondere von Straßenbelägen vom Typ einer Oberflächenbeschichtung, zur Fertigung von warm oder kalt aufgebrachten Straßendecken oder auch zur Herstellung von Dichtungsvorlagen.

**19.** Polymer-Mutterlauge, die insbesondere zur Herstellung von Bitumen-Polymer-Zusammensetzungen verwendbar ist, enthaltend (i) ein Kohlenwasserstofföl, das einen Destillationsbereich unter Atmosphärendruck, bestimmt gemäß der Norm ASTM D 86-67, zwischen 100°C und 600°C aufweist, und in diesem Öl gelöst (ii) ein lineares Blockcopolymer aus Styrol und konjugiertem Dien, das ein Gewichtsmittel des Molekulargewichts zwischen 120000 und 400000 hat und eine Struktur vom Typ A-B oder A-B-A aufweist, wobei A einen Polymerblock bezeichnet, der aus einem einzigen Polystyrolblock oder einem Polystyrolblock besteht, der, auf der Seite von B, durch ein statistisches Copolymer aus Styrol und dem konjugierten Dien verlängert ist, und B einen Polymerblock darstellt, der aus Grundbausteinen des konjugierten Diens gebildet ist, und (iii) ein Verknüpfungsmittel, dadurch gekennzeichnet, daß das Blockcopolymer aus Styrol und konjugiertem Dien einen Gehalt an Styrol in Form von Blockpolystyrol in dem oder den Polymerblöcken A zwischen 5,2% und 14,7% bezogen auf das Gewicht des Copolymers besitzt und dadurch, daß der Gesamtgewichtsgehalt des Blockcopolymers an Styrol höchstens 20% beträgt, wenn der oder die Blöcke A des Blockcopolymers A-B oder A-B-A aus einem Polystyrolblock bestehen, der auf der Seite von B durch ein statistisches Copolymer aus Styrol und konjugiertem Dien verlängert ist.

**20.** Mutterlauge nach Anspruch 19, dadurch gekennzeichnet, daß das Gewichtsmittel des Molekulargewichts des Blockcopolymers aus Styrol und konjugiertem Dien zwischen 150000 und 350000 und insbesondere zwischen 170000 und 250000 liegt.

**21.** Mutterlauge nach einem der Ansprüche 19 oder 20, dadurch gekennzeichnet, daß das Blockcopolymer aus Styrol und konjugiertem Dien einen Gewichtsgehalt an konjugiertem Dien von höchstens 90% besitzt.

**22.** Mutterlauge nach einem der Ansprüche 19 bis 21, dadurch gekennzeichnet, daß die konjugierte Dien-Komponente des Blockcopolymers aus Styrol und konjugiertem Dien ausgewählt wird unter Butadien, Isopren, Chloropren, carboxyliertem Butadien und carboxyliertem Isopren, insbesondere unter Butadien und Isopren.

**23.** Mutterlauge nach einem der Ansprüche 19 bis 22, dadurch gekennzeichnet, daß sie 5% bis 40%, bevorzugt 10% bis 35%, Copolymer und 0,02% bis 15%, bevorzugt 0,1% bis 5%, Verknüpfungsmittel bezogen auf das Gewicht des Kohlenwasserstofföls enthält.

**24.** Mutterlauge nach einem der Ansprüche 19 bis 23, dadurch gekennzeichnet, daß das Kohlenwasserstofföl einen Destillationsbereich unter Atmosphärendruck zwischen 150°C und 400°C aufweist.

**25.** Mutterlauge nach einem der Ansprüche 19 bis 24, dadurch gekennzeichnet, daß das Kohlenwasserstofföl ausgewählt wird unter den Erdölfraktionen mit aromatischem Charakter, den Erdölfraktionen mit naphthen-aromatischem Charakter, den Erdölfraktionen mit naphthen-paraffinischem Charakter, den Erdölfraktionen mit paraffinischem Charakter, den Steinkohleölen und den Ölen pflanzlichen Ursprungs.

**26.** Mutterlauge nach einem der Ansprüche 19 bis 25, dadurch gekennzeichnet, daß das Verknüpfungsmittel ein Produkt ist, das ausgewählt wird aus der Gruppe bestehend aus elementarem Schwefel, Kohlenwasserstoff-Polysulfiden, schwefelspendenden Vulkanisationsbeschleunigern, Gemischen dieser Produkte untereinander und/oder mit nicht-schwefelspendenen Vulkanisationsbeschleunigern.

**27.** Mutterlauge nach Anspruch 26, dadurch gekennzeichnet, daß das Verknüpfungsmittel ausgewählt wird unter (i) den Produkten M, die 0 bis 100 Gew.-% einer Komponente D, die aus einem oder mehreren schwefelspendenden Vulkanisationsbeschleunigern besteht, und 100 bis 0 Gew.-% einer Komponente E enthalten, die aus einem oder mehreren Vulkanisationsmitteln besteht, die ausgewählt werden unter elementarem Schwefel und Kohlenwasserstoff-Polysulfiden, und (ii) den Produkten N, die eine Komponente C, die aus einem oder mehreren nicht-schwefelspendenden Vulkanisationsbeschleunigern besteht, und ein Produkt M enthalten, wobei das Gewichtsverhältnis von Komponente C zu Produkt M von 0,01 bis 1 und bevorzugt von 0,05 bis 0,5 reicht.

**28.** Mutterlauge nach einem der Ansprüche 19 bis 27, dadurch gekennzeichnet, daß sie dadurch hergestellt wird, daß die Bestandteile, aus denen sie zusammengesetzt ist, unter Rühren bei Temperaturen zwischen 10°C und 170°C, bevorzugt zwischen 40°C und 120°C, in Kontakt gebracht werden.

## Claims

**1.** Process for the preparation of bitumen-polymer compositions, in which a mixture of bitumen with a linear block copolymer of styrene and conjugated diene which has a weight-average molecular mass of between 120,000 and 400,000 and has a structure of A-B or A-B-A type is produced at a temperature of between 100°C and 230°C, A denoting a polymer block consisting of a polystyrene block by itself or extended on the B side by a random copolymer of styrene and of the conjugated diene and B denoting a polymer block made up of conjugated diene units, the said block copolymer being employed in a quantity ranging from 0.5 % to 25 % by weight of bitumen, and with a coupling agent containing at least one sulphur-donor compound, and the mixture obtained is kept at a temperature of between 100°C and 230°C and with stirring, for a period of at least ten minutes, the said process being characterised in that the block copolymer of styrene and conjugated diene has a content of styrene in the form of polystyrene block in the polymer block(s) A of between 5.2 % and 14.7 % by weight of the copolymer and in that, when the block(s) A of the block copolymer A-B or A-B-A consist of a polystyrene block extended on the B side by a random copolymer of styrene and of the conjugated diene, the total weight content of styrene in the block copolymer is not more than 20 %.

**2.** Process according to Claim 1, characterised in that the weight-average molecular mass of the block copolymer of styrene and conjugated diene ranges from 150,000 to 350,000 and more especially from 170,000 to 250,000.

**3.** Process according to Claim 1 or 2, characterised in that the block copolymer of styrene and conjugated diene has a weight content of conjugated diene of not more than 90%.

**4.** Process according to one of Claims 1 to 3, characterised in that the quantity of block copolymer of styrene and conjugated diene which is added to the bitumen represents 0.5 % to 15 % and more especially 0.7 % to 10 % by

weight of the said bitumen.

5. Process according to one of Claims 1 to 4, characterised in that the block copolymer of styrene and conjugated diene is such that its conjugated diene component is chosen from butadiene, isoprene, chloroprene, carboxylated butadiene and carboxylated isoprene, and most especially from butadiene and isoprene.

6. Process according to one of Claims 1 to 5, characterised in that the coupling agent is a product chosen from the group made up of elemental sulphur, hydrocarbyl polysulphides, sulphur-donor vulcanisation accelerators, mixtures of such products with each other and/or with vulcanisation accelerators which are not sulphur-donors.

7. Process according to Claim 6, characterised in that the coupling agent is chosen from (i) the products M which contain, by weight, from 0 % to 100 % of a component D consisting of one or a number of sulphur-donor vulcanisation accelerators and from 100 % to 0 % of a component E consisting of one or a number of vulcanisation agents chosen from elemental sulphur and hydrocarbyl polysulphides and (ii) the products N which contain a component C consisting of one or a number of vulcanisation accelerators which are not sulphur-donors and a product M in a weight ratio of the component C to the product M ranging from 0.01 to 1 and preferably from 0.05 to 0.5.

8. Process according to one of Claims 1 to 7, characterised in that the coupling agent is employed in a proportion capable of supplying a quantity of sulphur representing, by weight, 0.1 to 10 % and preferably 0.4 to 8 % of the weight of the linear block copolymer of styrene and conjugated diene.

9. Process according to one of Claims 1 to 8, 5 characterised in that the bitumen is chosen from bitumens and bitumen mixtures which have a kinematic viscosity at 100°C of between 0.5 x $10^{-4}$ $m^2/s$ and 3 x $10^{-2}$ $m^2/s$ and preferably between 1 x $10^{-4}$ $m^2/s$ and 2 x $10^{-2}$ $m^2/s$.

10. -Process according to Claim 9, characterised in that the bitumen has a penetration higher than 5 and more particularly between 5 and 500 and more especially between 20 and 400.

11. Process according to one of Claims 1 to 10, characterised in that the mixture made up of the bitumen, the linear block copolymer of styrene and conjugated diene and the coupling agent has added to it, at any time of its formation, from 1 to 40 % and more particularly from 2 to 30 %, by weight of the bitumen, of a fluxing agent.

12. Process according to Claim 11, characterised in that the said fluxing agent consists of a hydrocarbon oil exhibiting a distillation range at atmospheric pressure, determined according to ASTM Standard D 86-67, of between 100°C and 600°C and situated more especially between 150°C and 400°C.

13. Process according to Claim 12, characterised in that the hydrocarbon oil is chosen from petroleum cuts of aromatic nature, petroleum cuts of naphthenoaromatic nature, petroleum cuts of naphthenoparaffinic nature, petroleum cuts of paraffinic nature, coal oils and oils of vegetable origin.

14. Process according to Claim 12 or 13, characterised in that the block copolymer and the coupling agent are incorporated into the bitumen in the form of a master solution of these products in the hydrocarbon oil.

15. Process according to Claim 14, characterised in that the master solution is prepared by bringing the ingredients of which it is composed into contact, with stirring, at temperatures of between 10°C and 170°C and preferably between 40°C and 120°C.

16. Process according to Claim 14 or 15, characterised in that the master solution contains 5 % to 40 %, preferably 10 % to 35 %, of copolymer and 0.02 % to 15 %, preferably 0.1 % to 5 %, of coupling agent, both calculated as weight of the hydrocarbon oil.

17. Process according to one of Claims 14 to 16, characterised in that from 80 to 95 % by weight of bitumen are brought into contact, at a temperature of between 100°C and 230°C and with stirring, with 20 to 5 % by weight of the master solution, the latter containing, as weight of the hydrocarbon oil used as solvent, 10 to 35 % of block copolymer and 0.1 to 5 % of coupling agent, and the mixture thus obtained is then kept stirred at a temperature of between 100°C and 230°C, and preferably at the temperature employed for bringing the bitumen into contact with the master solution, for a period of at least 10 minutes and preferably of between 10 and 60 minutes.

**18.** Application of the bitumen-polymer compositions obtained by the process according to one of Claims 1 to 17, directly or after emulsifying with water, for the production of coatings and especially of road dressings of the surface dressing type, for the production of bituminous mixtures applied hot or cold, or else for the production of seal coatings.

**19.** Master solution of polymer, usable especially for the preparation of bitumen-polymer compositions, comprising (i) a hydrocarbon oil which has a distillation range at atmospheric pressure, determined according to ASTM Standard D 86-67, of between 100°C and 600°C and, in solution in this oil, (ii) a linear block copolymer of styrene and conjugated diene which has a weight-average molecular mass of between 120,000 and 400,000 and has a structure of A-B or A-B-A type, A denoting a polymer block consisting of a polystyrene block by itself or extended on the B side by a random copolymer of styrene and of the conjugated diene and B denoting a polymer block made up of conjugated diene units, and (iii) a coupling agent, characterised in that the block copolymer of styrene and conjugated diene has a content of styrene in the form of polystyrene block in the polymer block(s) A of between 5.2 % and 14.7 % by weight of the copolymer 5 and in that, when the block(s) A of the block copolymer A-B or A-B-A consist of a polystyrene block extended on the B side by a random copolymer of styrene and of the conjugated diene, the total weight content of styrene in the block copolymer is not more than 20 %.

**20.** Master solution according to Claim 19, characterised in that the weight-average molecular mass of the block copolymer of styrene and conjugated diene ranges from 150,000 to 350,000 and more especially from 170,000 to 250,000.

**21.** Master solution according to Claim 19 or 20, characterised in that the block copolymer of styrene and conjugated diene has a weight content of conjugated diene of not more than 90 %.

**22.** Master solution according to one of Claims 19 to 21, characterised in that the conjugated diene component of the block copolymer of styrene and conjugated diene is chosen from butadiene, isoprene, chloroprene, carboxylated butadiene and carboxylated isoprene, and most especially from butadiene and isoprene.

**23.** Master solution according to one of Claims 19 to 22, characterised in that it contains 5 % to 40 %, preferably 10 % to 35 %, of copolymer and 0.02 % to 15 %, preferably 0.1 % to 5 %, of coupling agent, both calculated as weight of the hydrocarbon oil.

**24.** Master solution according to one of Claims 19 to 23, characterised in that the hydrocarbon oil has a distillation range at atmospheric pressure situated between 150°C and 400°C.

**25.** Master solution according to one of Claims 19 to 24, characterised in that the hydrocarbon oil is chosen from petroleum cuts of aromatic nature, petroleum cuts of naphthenoaromatic nature, petroleum cuts of naphthenoparaffinic nature, petroleum cuts of paraffinic nature, coal oils and oils of vegetable origin.

**26.** Master solution according to one of Claims 19 to 25, characterised in that the coupling agent is a product chosen from the group made up of elemental sulphur, hydrocarbyl polysulphides, sulphur-donor vulcanisation accelerators, mixtures of such products with each other and/or with vulcanisation accelerators which are not sulphur-donors.

**27.** Master solution according to Claim 26, characterised in that the coupling agent is chosen from (i) the products M which contain, by weight, from 0 % to 100 % of a component D consisting of one or a number of sulphur-donor vulcanisation accelerators and from 100 % to 0 % of a component E consisting of one or a number of vulcanising agents chosen from elemental sulphur and hydrocarbyl polysulphides and (ii) the products N, which contain a component C consisting of one or a number of vulcanisation accelerators which are not sulphur-donors and a product M in a weight ratio of the component C to the product M ranging from 0.01 to 1 and preferably from 0.05 to 0.5.

**28.** Master solution according to one of Claims 19 to 27, characterised in that it is prepared by bringing the ingredients of which it is composed into contact, with stirring, at temperatures of between 10°C and 170°C and preferably between 40°C and 120°C.